# EUROPÄISCHE PATENTANMELDUNG

(11) **EP 0 973 121 A2**
(43) Veröffentlichungstag der Anmeldung: **19.01.2000**
(21) Anmeldenummer: 99113111.1
(22) Anmeldetag: 07.07.1999
(51) Int. Cl.: G06K 9/00

(54) **Bildverarbeitungsverfahren und Vorrichtungen zur Erkennung von Objekten im Verkehr**

(30) Priorität: 14.07.1998 DE 19831413
(71) Anmelder: DaimlerChrysler AG, 70567 Stuttgart (DE)
(72) Erfinder: Gavrila, Dariu, Dr., 89073 Ulm (DE)

(57) **Zusammenfassung**

Es wird ein Bildverarbeitungsverfahren angegeben, das insbesondere zur Detektion und Erkennung von Objekten im Verkehr eingesetzt wird. Örtlich aufgeweichte Merkmalsbilder einer Bildszene werden mit Merkmalsbildern von Mustern korreliert, um Objekte in reellen Szenen anhand von Bildern zu detektieren und zu erkennen. Es werden mehrere Muster, die in einer Muster-Baumstruktur geordnet sind, mit der Bild-Szene korreliert. Um Fehldetektionen möglichst zu verhindern, werden die Merkmale in verschiedene Merkmalstypen unterteilt. Weiterhin werden Vorrichtungen zur Erkennung von Verkehrsobjekten im Fahrzeug und zur Verkehrsüberwachung angegeben, in denen das erfindungsgemäße Bildverarbeitungsverfahren verwendet wird.

## Beschreibung

Die Erfindung betrifft ein Bilderverarbeitungsverfahren nach dem Oberbegriff des Patentanspruch 1 und Vorrichtungen zur Erkennung von Objekten im Verkehr nach dem Oberbegriff der Patentansprüche 14 und 16.

Die Verwendung der Erfindung ist nicht nur auf die Objekterkennung im Verkehr beschränkt, sondern kann bei jeglicher Art von Bildüberwachungssystemen und in Bilddatenbanken eingesetzt werden.

In einer Veröffentlichung von W.J.Rucklige in Int.J.of Computer Vision 24(3), S.251-270 (1997) ist ein Verfahren zur Korrelation eines vorgegebenen Musters mit einem auszuwertenden Bild durch Verwendung einer Distanztransformation angegeben, bei dem ein Muster zunächst einer affinen Transformation mit zu ermittelnden Koeffizienten unterworfen und danach mit dem Bild korreliert wird.
Ein auf Distanztransformationen basierendes Bilderkennungsverfahren, das durch die Benutzung einer Bildauflösungpyramide erweitert wird, ist aus G.Borgefors in IEEE Trans.on Pattern Analysis and Machine Intelligence, 10(6) S.849-865 (1988) bekannt.

In "Hybrid approach for traffic sign recognition" von Janssen et al. in Proc. of Intelligent Vehicle Conference, S.390-395 (1993) wird ein Verfahren beschrieben, das mittels zusammenhängender Farbgebiete Bereiche im Bild detektiert, die möglicherweise Verkehrszeichen enthalten. Die Menge der zu analysierenden Bereiche wird weiter eingeschränkt durch die Auswertung von Heuristiken, die auf Formattributen der Regionen ( z.B. Fläche, Exzentrizität) und Nachbarschaftsbeziehungen beruhen. Die als mögliche Verkehrszeichen verbleibenden Bildregionen werden im Originalbild ausgeschnitten und klassifiziert.

Ein Verfahren zur Verkehrszeichenerkennung ist in G.Piccioli et al. "Image and Computing" Nr.14,S.209-223 (1996) veröffentlicht. In einem farbbasierten Ansatz zur Verkehrszeichenerkennung werden verschiedene Erkennungsmöglichkeiten angegeben, mit denen mögliche Formen von Verkehrszeichen ( Kreise, Dreiecke) ausgewertet werden. Es werden zuerst die Kontursegmente detektiert und anschließend wird geprüft, ob diese günstig kombiniert werden können, um die gewünschte Form zu erhalten.

In "Fast object recognition in noisy images using simulated annealing" von M.Betke et al. in Proc. of IEEE Int. Conf.on Computer Vision, S.523-530 (1995) wird ein auf Pictogramme basiertes Verfahren zur Verkehrszeichenerkennung beschrieben, bei dem verschiedene Muster mit einem Bild korreliert werden. Die Muster beinhalten die Pictogramminformation von gesuchten Verkehrszeichen.

In des Patentschrift DE 36 19 824 C2 von E.D. Dickmanns ist eine Vorrichtung zum Anzeigen der aktuell gültigen oder der nach den Umgebungsbedingungen sicheren Höchstgeschwindigkeit für Straßenfahrzeuge beschrieben. Mit einer schwenkbaren Kamera, deren Bilder ausgewertet werden, werden über eine Informations- und Auswerteeinrichtung Verkehrszeichen detektiert und erkannt. Das Ergebnis der Erkennung wird zusammen mit anderen Sensorinformationen in einer Anpassungsschaltung kombiniert. Das Ergebnis wird dem Fahrer angezeigt.

Aufgabe der Erfindung ist es, die Objektdetektion in Bildern auf Grundlage von vorbekannten Verfahren in seiner Leistung zu optimieren.

Die Erfindung ist in Bezug auf das Verfahren in Patentanspruch 1 beschrieben. Die Unteransprüche enthalten vorteilhafte Aus- und/oder Weiterbildungen.

Die Erfindung hat den Vorteil, daß mittels Korrelation mit den durch Transformation örtlich aufgeweichten Merkmalsbildern einer Bild-Szene mit Merkmalsbildern von Mustern ( oder umgekehrt) die Möglichkeit geschaffen wird, Objekte in natürlichen Szenen anhand von Bildern zu detektieren und/oder zu erkennen. Dabei können die Objekte teilweise verdeckt sein und eine Vielfalt von Erscheinungsformen im Bild haben ( z.B. verschieden aussehen wegen unterschiedlicher Lichtverhältnisse und verschiedener Formen, Texturen, Positionen, Orientierungen und Bewegungen des Objektes). Dies trifft z.B. für im Verkehr vorkommende Objekte wie Fußgänger, Fahrzeuge, Verkehrszeichen u.ä. zu.
Die Merkmalsbild-Muster der zu detektierenden und erkennenden Objekte werden durch Stichproben an Beispielen oder durch Vorkenntnisse über die Objekte analytisch ermittelt.
Durch die im erfindungsgemäßen Verfahren im Bildausschnitt speziell durchgeführte Korrelation mit den durch Transformation örtlich aufgeweichten Merkmalsbildern einer Bild-Szene mit den Merkmalsbildern von Mustern ( oder umgekehrt) wird eine erfolgreiche Detektion und Erkennung von Objekten auch bei fehlenden oder nicht einem sogenannten Prototyp entsprechenden Daten durchgeführt. Die im Verfahren eingesetzte Methode der örtlichen Aufweichung der Merkmale vor der Korrelation läßt notwendige Toleranzen zwischen Muster und Objekterscheinungsform zu.

Das erfindungsgemäße Verfahren hat außerdem den Vorteil, daß N Musterbilder, die ein oder mehrere zu detektierende Objekte darstellen, in einer Bild-Szene durch Bildung einer Muster-Baumstruktur (Musterhierarchie) korreliert werden. Dadurch wird das Verfahren effizienter als bei Methoden, diejeweils N Muster getrennt korrelieren.

Unabhängig von der Benutzung einer Muster-Baumstruktur hat das erfindungsgemäße Verfahren den Vorteil, daß mehrere Merkmalstypen, z.B. Kantenorientierungen, gleichzeitig bei der Korrelation berücksichtigt werden. Durch die Benutzung von M verschiedenen Merkmalstypen wird die Wahrscheinlichkeit einer fehlerhaften Musterzuordnung im Bild verringert. Die Korrelation erfolgt dabei mit korrespondierenden Merkmalen.

Ein weiterer Vorteil der Erfindung besteht darin, daß die Detektionsergebnisse durch bekannte Klassifikationsmethoden der Mustererkennung ausgewertet werden und damit eine Objekterkennung durchgeführt wird.

Da das Verfahren nicht unbedingt auf der Auswertung von Farbinformationen beruht, ist vorteilhafterweise eine Vorrichtung mit einer monochromatischen Kamera möglich, bei der Datenkonvertierungsaufwand gering ist und die Vorrichtung deshalb kostengünstig ist.

Die Erfindung wird nachfolgend anhand von Ausführungsbeispielen unter Bezugnahme aufschematische Zeichnungen näher erläutert.
In Fig.1 ist ein Flußdiagramm für ein Bildverarbeitungsverfahren basierend auf der Korrelation von örtlich aufgeweichten Merkmalsbildern dargestellt.
Fig. 2 zeigt eine Anwendung des Bildverarbeitungsverfahrens mit Kantenmerkmalen. Fig. 2a zeigt eine Bild-Szene; Fig. 2b zeigt ein dazu passendes Muster; Fig. 2c zeigt das Kantenbild der Szene; Fig. 2d zeigt das mit der Distanztransformation erzeugte Kantenbild der Szene.
In Fig. 3 ist eine Muster-Baumstruktur von verschiedenen Objektformen ( Dreiecke, Kreise) und Größen der Objekte dargestellt.
Fig. 4 zeigt ein Flußdiagramm für ein Bildverarbeitungsverfahren zur Objektdetektion, das auf der Korrelation von aufgeweichten Kantenorientierungen basiert.
In Fig. 5 sind anhand eines Flußdiagramms die Ergebnisse aus dem Objektdetektionsverfahren mittels Objektklassifizierung zur Objekterkennung dargestellt.

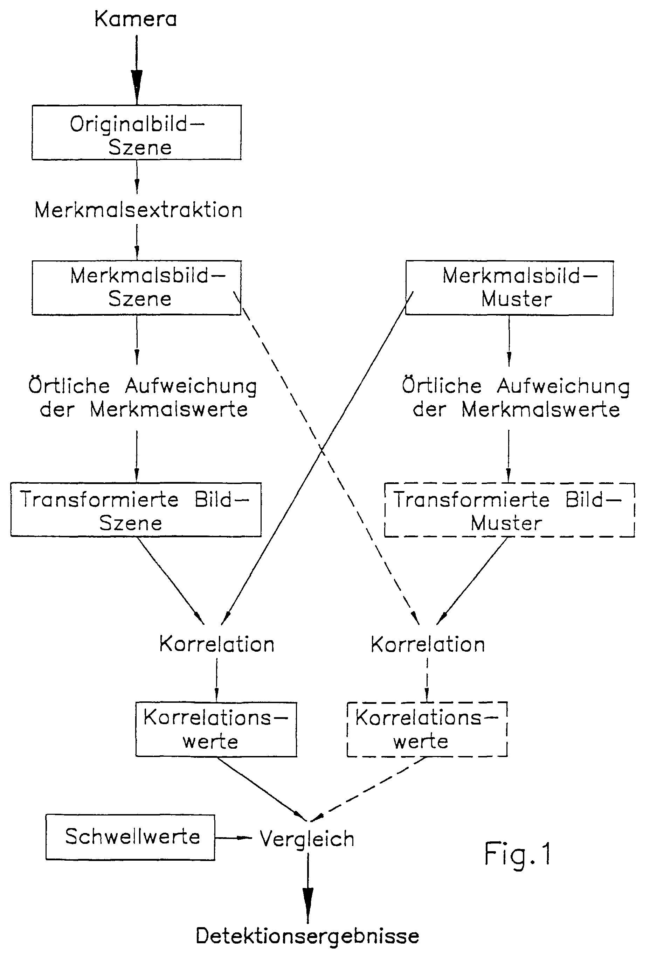

In dem Bildverarbeitungsverfahren gemäß Fig. 1 wird auf die von einer Kamera erfaßte Originalbild-Szene eine Merkmalsextraktion angewandt. Es entsteht eine Merkmalsbild-Szene, wobei jeder Pixelwert ein Maß für die Anwesenheit bzw. Ausprägung von einem bestimmten Merkmal an der Pixelposition ( Merkmalswert) ist. Diese Merkmalsbild-Szene wird mit einem korrespondierenden Merkmalsbild-Muster korreliert. Dazu wird zuerst das Merkmalsbild der Szene transformiert, derart, daß es zu einer Aufweichung der Merkmalswerte kommt. Die Aufweichung erfolgt mit einem Filter oder einer Transformation, wobei die Merkmalswerte örtlich aufgeweicht werden, d.h. daß die Werte mit zunehmendem Bildabstand entweder monoton steigen oder fallen. Die Aufweichung wird z.B. durch eine Distanztransformation oder ein beliebiges Tiefpaß-Filter erreicht. Es entsteht eine transformierte Bild-Szene.
Das Merkmalsbild-Muster wird an bestimmten Bildpositionen mit der transformierten Bild-Szene korreliert. Die erzeugten Korrelationswerte bilden ein Maß für die Übereinstimmung der Muster mit der Bild-Szene an den jeweiligen Bildpositionen.. Um zu entscheiden, ob das Objekt als detektiert eingestuft werden kann, wird anschließend ein Schwellwertvergleich durchgeführt ( siehe durchgezogene Linie in Fig. 1). Die Detektionsergebnisse erhalten jeweils die Bildposition, in der ein bestimmtes Muster erfolgreich korreliert wird.
Das Korrelieren von Merkmalsbild-Muster und Merkmalsbild-Szene kann auch derart durchgeführt werden, daß zuerst die Aufweichung des Merkmalsbild-Musters ausgeführt wird ( transformiertes Bildmuster) und anschließend mit der Merkmalsbild-Szene korreliert wird (siehe gestrichelte Linien in Fig. 1). Eine Korrelation von transformierter Bild-Szene mit transformiertem Bildmuster ist ebenfalls möglich.
Bei der Korrelation von Bildmustern und Bildszenen werden nach bekannten Verfahren Merkmalsvektoren aus den jeweiligen Pixelwerten erstellt und das Skalarprodukt der Merkmalsvektoren gebildet. Auch Korrelationsvarianten mit einer sogenannten robusten Normierung ( z.B. mit der Hausdorff-Distanz- oder Chamfer-Distanz-Transformation) sind einsetzbar.

Die oben angegebene Merkmalsextraktion kann mit beliebigen Merkmalen durchgeführt werden, die pixelweise einer Bild-Szene zugeordnet sind.
Häufig eingesetzt werden Kantenmerkmale, die mit einem sogenannten Sobel-Filter extrahiert werden.

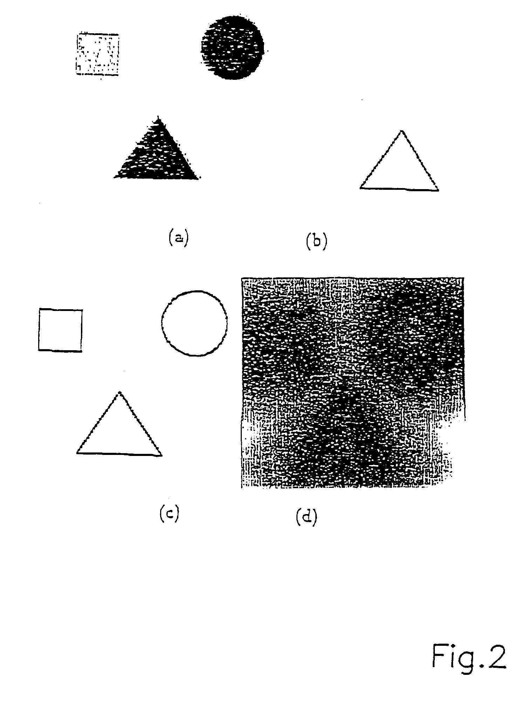

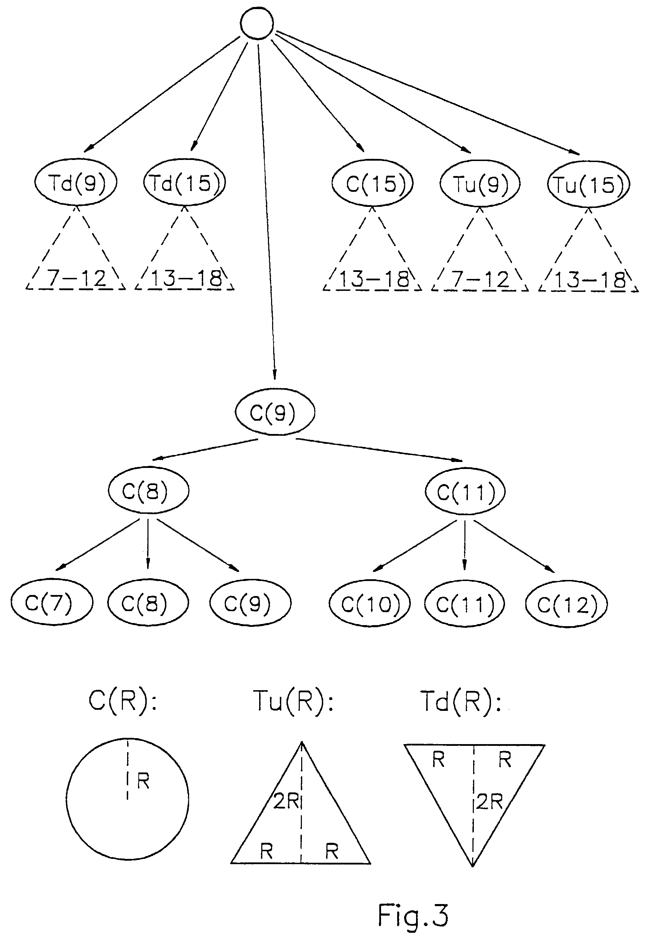

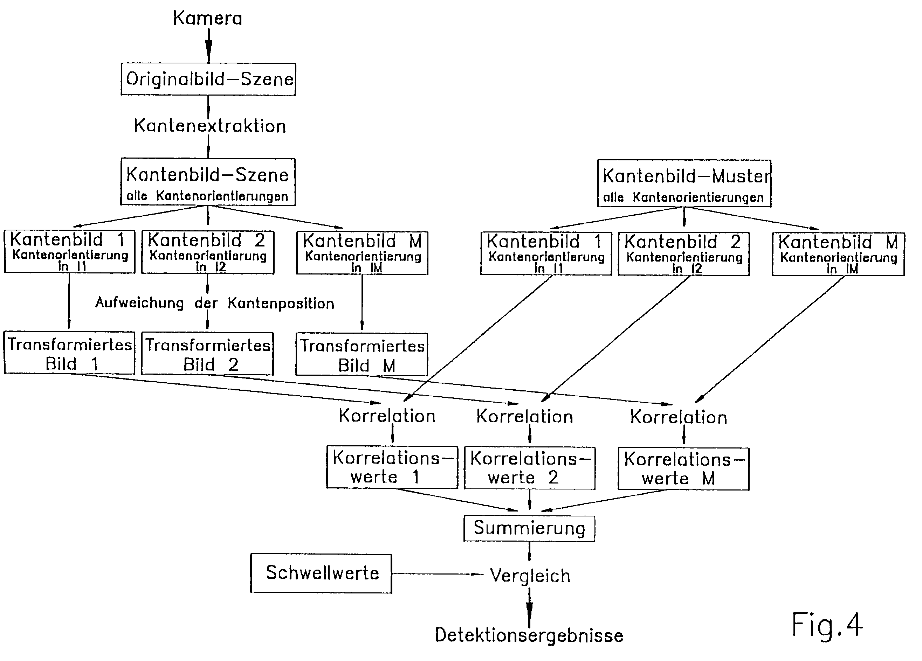

In Fig. 2 sind Beispiele für die Erkennung von Merkmalen dargestellt. Die Aufgabe besteht z.B. darin, das Dreieck aus der Originalbild-Szene in Fig. 2a anhand von dessen Form (Kante) zu detektieren. Das entsprechende Kanten-Muster ( Dreieck) ist in Fig. 2b dargestellt. Eine binäre Kantenextraktion der Bild-Szene ergibt die Kantenbild-Szene in Fig. 2c. Das Kantenbild der Szene wird mit einer Distanztransformation örtlich aufgeweicht, dabei wird entweder ein Datenpixel zugeordnet oder nicht. Das Ergebnis der Distanztransformation ist ein nicht-binäres Bild ( transformierte Bild-Szene), wobei jeder Pixelwert den Abstand im Sinne einer Abstandsnorm zum nächsten Datenpixel im nicht transformierten Bild darstellt (Fig.2d). Kleine Abstandswerte sind in Fig. 2d an einem dunklen Grauton erkennbar.

Die vorliegende Erfindung erweitert das Verfahren gemäß Fig. 1 dadurch erweitert, daß mehrere Objektklassen definiert und erkannt werden. Die Objektklassen werden durch N Muster dargestellt, wobei die N Muster in eine Baumstruktur (Musterhierarchie) geordnet sind.
Die Muster-Baumstruktur hat verschiedene Stufen, wobei die niedrigste Stufe aus N Knoten besteht, welche die jeweiligen zu erkennenden Muster beinhaltet. Die höheren Stufen bestehen aus Knoten , welche die sogenannten Prototyp-Muster darstellen. Die Prototyp-Muster repräsentieren Gruppen von Mustern aus einer niedrigeren Stufe. Die zu einem bestimmten Knoten X zugewiesenen Knoten aus einer niedrigeren Stufe werden als "Kinder" des Knoten X bezeichnet.
In dem erfindungsgemäßen Verfahren wird die Bild-Szene nicht mehr separat mit den N Mustern korreliert, sondern die Muster-Baumstruktur wird mit der Bild-Szene korreliert. Dies geschieht dadurch, daß die Baumstruktur mit einer vorgegebenen Strategie abgearbeitet wird ( z.B. depth-first oder breadth-first). Bei jeder Knotenbearbeitung wird das dazugehörige Prototyp-Muster mit der Bild-Szene korreliert. Dabei wird ein bestimmter Bildausschnitt mit einem knotenabhängigen Detektionsschwellwert ausgewertet. Das Ergebnis der Korrelation ergibt Pixelkoordinaten, die davon abhängen, ob das Prototyp-Muster unter Berücksichtigung des Detektionsschwellwertes erfolgreich mit der Bild-Szene korreliert wurde. In dem Bildbereich oder in dessen unmittelbarer Nähe werden anschließend die Kinder des Prototyp-Musters der niedrigeren Stufe korreliert. Vorteilhaft an diesem hierarchisch gestalteten Auswerteverfahren ist, daß durch ein Cluster-Verfahren in jeder Stufe ähnliche Muster in dieselbe Gruppe eingeordnet werden und damit ein Prototyp gebildet wird. Der Prototyp stellt das repräsentative Muster für die jeweilige Gruppe dar. Da mit Prototyp-Mustern und nicht mit jedem einzelnen Muster der Gruppe korreliert wird, ist das Verfahren zuverlässig und schnell.
Die Muster-Baumstruktur wird vorzugsweise mit einem Grob-zu-Fein Pixelraster kombiniert. Die Prototyp-Muster in höheren Stufen der Baumstruktur repräsentieren stark verallgemeinerte, unscharfe Muster, die in einem groben Pixelraster mit der Bild-Szene korreliert werden. Die Detektionsschwellwerte sind dabei wenig restriktiv eingestellt. In den niederen Stufen der Baumstruktur werden die Muster immer spezifischer. Diese Muster werden vorzugsweise mit einem feineren Pixelraster mit der Bild-Szene korreliert mit restriktiven Detektionsschwellwerten.

In einem Ausführungsbeispiel wird die Detektion von Formen von Verkehrszeichen mit der Muster-Baumstruktur erläutert. Es werden Kantenmerkmale der Muster für Kreise C (R) und Dreiecke mit Spitze nach oben Tu(R) und Spitze nach unten Td(R) benutzt mit einem Radius R in der Größenordnung von 7-18 Pixel. Die Größe des Originalbildes beträgt 360 mal 288 Pixel. Es ergeben sich insgesamt 36 Muster, für die eine Baumstruktur gemäß Fig. 3 erstellt wird. Die Baumstruktur hat drei Stufen. Die Prototyp-Muster in Stufe 1 sind die Muster mit den Radien R, die gleich dem Mittelwert der Intervalle [7,12] und [13,18] entsprechen, nämlich 9 und 15. Die Prototyp-Muster der Stufe 2 sind die Muster mit den Radien, die dem Mittelwert der Intervalle [7,9], [10,12], [13,15] und [16,18] entsprechen, nämlich 8, 11, 14 und 17. In Stufe 3, der niedrigsten Stufe, sind die 36 Muster dargestellt.
Um diese Muster-Baumstruktur mit der Bild-Szene zu korrelieren, wird zunächst eine Kantenextraktion in der Originalbild-Szene durchgeführt und die binäre Merkmalsbild-Szene mit der Distanztransformation örtlich aufgeweicht analog dem Verfahren gemäß Fig. 1. Die transformierte Bild-Szene wird mit den Knoten der Muster-Baumstruktur korreliert. Die Knoten der Muster-Baumstruktur werden dabei wie folgt durchlaufen: zuerst die Knoten in Stufe 1, dann folgen die Knoten in Stufe 2 usw. Bei der Grob-zu-Fein-Abtastung von einem Muster wird eine Rastergröße r von z.B. r = 8, 4, 1 Pixel für die drei Stufen des Musterbaumes zugrundegelegt.

Eine weitere Verbesserung des erfindungsgemäßen Verfahrens besteht darin, M verschiedene Merkmalstypen zu unterscheiden. Sowohl für die Bild-Szene als auch für die N-Muster werden merkmalstypische Bilder erzeugt. Es entstehen (N+1)M nach Typ geordnete Merkmalsbilder. Die örtliche Aufweichung der Merkmalsbilder und die nachfolgende Korrelation findet für jeden der M Merkmalstypen statt. Die einzelnen Korrelationsergebnisse werden anschließend summiert.
Durch die gleichzeitige Benutzung von M Merkmalstypen werden fehlerhafte Musterzuordnungen im Bild verringert, da bei der Korrelation nicht nur die räumliche Verteilung von Merkmalen in Muster und Bild-Szene betrachtet wird, sondern auch die Übereinstimmung der Merkmalstypen.
In einem weiteren Ausführungsbeispiel gemäß Fig. 4 wird die Benutzung von unterschiedlichen Merkmalstypen erläutert. Es werden Kanten als Merkmale benutzt, die in Kantenorientierungen untergliedert sind. Ein Kantenbild der Szene und ein Kantenbild eines Musters ist in M Kantenbilder je nach Kantenorientierung untergliedert in beispielsweise I1 bis IM Intervalle für die möglichen Orientierungen auf dem Einheitskreis. Anschließend werden die M Kantenbilder der Bild-Szene mit einer Distanztransformation örtlich aufgeweicht. Die Korrelation der M Kantenbild-Muster mit den M transformierten Kantenbildern der Szene wird anschließend für gleiche Intervalle durchgeführt wie in Fig. 4 dargestellt.
Durch Kombination der Muster-Baumstruktur mit der Differenzierung nach Merkmalstypen von Bild-Szene und Muster werden, anstelle von einer Korrelation mit einem Knoten in der Baumstruktur, M einzelne jeweils nach Merkmalstyp unterschiedene Korrelationen durchgeführt. Die M Korrelationsergebnisse werden anschließend summiert.

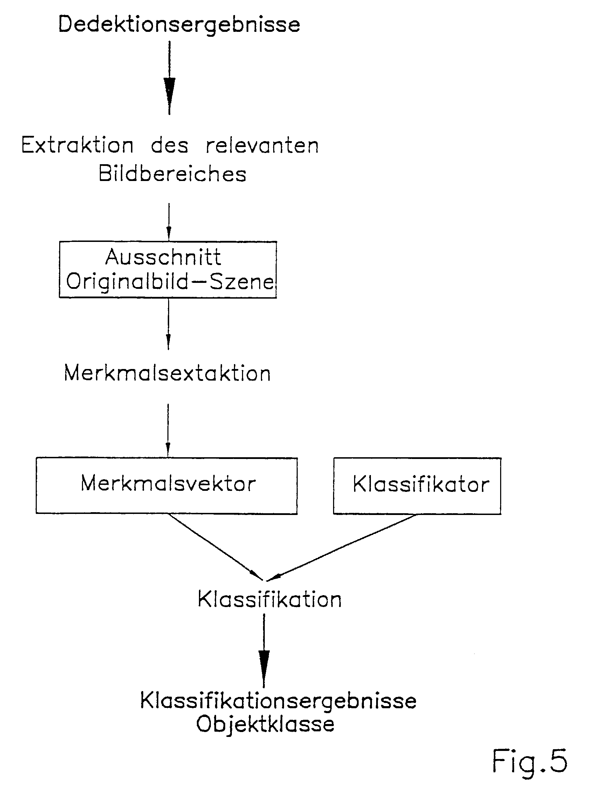

Die Detektionsergebnisse aus dem erfindungsgemäßen Bildverarbeitungsverfahren können anschließend mit bekannten Klassifikationsverfahren einer bestimmten Objektklasse zugeordnet und überprüft werden. Gemäß Fig.5 wird aus dem Originalbild ein Bildausschnitt gewählt, für den die Korrelation erfolgreich durchgeführt wurde. In diesem Bildausschnitt werden beliebige Merkmale extrahiert und ein Merkmalsvektor ermittelt. Mit bekannten Klassifikationsverfahren wird der Merkmalsvektor einer bestimmten Objektklasse zugeordnet. Beispielsweise werden Klassifikationsverfahren eingesetzt, die in einer Lernphase an eine gekennzeichnete Stichprobe adaptiert wurden. Mögliche Klassifikatoren sind z.B. Polynomklassifikatoren, Normalverteilungsklassifikatoren und neuronale Netze.

Das erfindungsgemäße Verfahren ist auch für den Fall einsetzbar, daß die Muster nicht im gesamten Bild gesucht werden, sondern lediglich in Bildausschnitten. Eine derartige Reduzierung des Suchbereiches ergibt sich z.B. bei der Verfolgung eines Objektes mit der Annahme, daß die Objektbewegung kontinuierlich ist. Andere Annahmen, die eine Reduzierung des Suchbereiches ermöglichen, sind z.B. Weltwissen über die Position von Objekten oder Informationen von anderen Sensoren (z.B. GPS) oder Karteninformation oder Informationen aus vorgeschalteten Bildverarbeitungsverfahren.
Die Erkennungsergebnisse aus dem vorliegenden Bildverarbeitungsverfahren können durch die Auswertung von Bildfolgen verbessert werden, wobei die Ergebnisse über die Zeit integriert werden.
Das erfindungsgemäße Bildverarbeitungsverfahren wird vorteilhafterweise zur Erkennung von Objekten im Verkehr eingesetzt. Die Objekte sind Einrichtungen der Verkehrsinfrastruktur, z.B. Verkehrszeichen, Straßenränder, Straßenmarkierungen sowie Verkehrsteilnehmer ( Fahrzeuge, Fußgänger, Radfahrer usw.).
Das Bildverarbeitungsverfahren kann dabei sowohl im Straßenverkehr, als auch im Bahn- oder Luftverkehr eingesetzt werden.
Eine Vorrichtung zur Erkennung von Verkehrsobjekten, die beispielsweise in einem Kraftfahrzeug einsetzt wird, besteht z.B aus einer Bildsensoreinheit, einer Informationsverarbeitungseinheit, einer Speicher und Anzeigeeinheit. Die bewegliche Bildsensoreinheit, z.B. eine oder mehrere Kameras, erfaßt teilweise oder vollständig das Verkehrsumfeld mit Bilddaten. Mit der Informationsverarbeitungseinheit werden aus diesen Bilddaten unter Verwendung des beschriebenen Bildverarbeitungsverfahrens Objekte im Verkehrsumfeld detektiert und erkannt. Die Speichereinheit speichert die Bilddaten und über die Anzeigeeinheit werden die detektierten und erkannten Objekte dem Fahrer visuell, z.B. über ein Display, oder akustisch vermittelt.
Durch das Erfassen von relevanten Objekten im Verkehr, wie z.B. ein Einfahrtverbotsschild oder Verkehrsteilnehmer, die sich unmittelbar vor dem Fahrzeug befinden, soll ein Fahrverhalten des Fahrers bewirkt werden, das die Sicherheit im Verkehr fördert. Die durch das Bildverarbeitungsverfahren erfaßten Daten können außerdem zur Regelung des Fahrverhaltens des Fahrzeugs weiterverarbeitet werden. Über eine Regeleinheit im Fahrzeug kann z.B. das Quer- und Längsfahrverhalten sowie die Geschwindigkeit geregelt werden.
Weiterhin können die mit dem Bildverarbeitungsverfahren erfaßten Daten für spätere Zugriffe in einer Datenbank gespeichert werden.

Eine weitere Verwendung findet das erfindungsgemäße Bildverarbeitungsverfahren bei der Verkehrsüberwachung. Eine Bildsensoreinheit, z.B. eine oder mehrere stationäre Kameras, erfassen teilweise oder vollständig das Verkehrsumfeld. Eine Informationseinheit detektiert und erkennt die Bilddaten mit dem erfindungsgemäßen Verfahren und wertet die Ergebnisse, z.B. den Verkehrsfluß aufgeschlüsselt nach verschiedenen Verkehrsteilnehmern aus. Eine Speichereinheit speichert die Bilddaten und die Auswertungsergebnisse. Eine Anzeigeeinheit gibt die erkannten Objekte und die Auswertungsergebnisse wieder.

Die durch die Erkennungsergebnisse ermittelten Objektpositionen können von Bildkoordinaten in 2D- oder 3D- Weltkoordinaten transformiert werden. Die Transformation erfolgt mit der Annahme, daß die Kameras kalibriert sind. Außerdem wird angenommen, daß der Grund der Bildszene eben ist.

## Patentansprüche

1. Bildverarbeitungsverfahren, bei dem ein oder mehrere Merkmalsbild-Muster mit einem Originalbild korreliert werden, wobei durch Merkmalsextraktion aus einer Originalbild-Szene eine Merkmalsbild-Szene gebildet wird, deren Merkmalswerte durch eine Transformation oder ein Filter örtlich aufgeweicht und die transformierte Bildszene mit den Merkmalsbild-Mustern korreliert werden und/oder daß die Merkmalswerte der Merkmalsbild-Muster durch eine Transformation oder ein Filter aufgeweicht werden und die transformierten Merkmalsbild-Muster mit der Merkmalsbild-Szene korreliert werden, und daß mit den verarbeiteten Bilddaten Objekte detektiert und erkannt werden, dadurch gekennzeichnet, daß bei der Korrelation der transformierten Bildszenen mit den Merkmalsbild-Mustern auf Wissen zurückgegriffen wird, welches auf den Kenntnissen über die zu detektierenden Objekte und/oder auf Weitwissen über die Situation in zum Originalbild gehörigen Szenario basiert, und daß auf Grund dieses Wissens nur bestimmte Bereiche der Merkmalsbild-Szene und/oder nur bestimmte Merkmalsbild-Muster miteinander korreliert werden.

2. Bildverarbeitungsverfahren nach Anspruch 1, dadurch gekennzeichnet, daß N Merkmalsbild-Muster der zu detektierenden und erkennenden Objekte anhand von Stichproben oder durch Vorkenntnisse über die Objekte analytisch generiert werden.

3. Bildverarbeitungsverfahren nach den Ansprüchen 1 oder 2, dadurch gekennzeichnet, daß die N Merkmalsbild-Muster durch Bildung einer Muster-Baumstruktur mit mehreren Stufen mit der Merkmalsbild-Szene korreliert werden, daß die Muster-Baumstruktur Prototyp-Muster enthält, die aus einer Gruppe von Merkmalsbild-Mustern aus einer niedrigeren Stufe gebildet werden, und daß in Bildbereichen, in denen ein Prototyp-Muster mit der Merkmalsbild-Szene erfolgreich korreliert wird, die Bildszene mit weiteren Prototyp-Muster, den sogenannten Kindern der Baumstruktur korreliert wird.

4. Bildverarbeitungsverfahren nach Anspruch 3, dadurch gekennzeichnet, daß die Korrelation der Merkmalsbild-Szene über die Muster-Baumstruktur mit einer Grob-zu-Fein-Pixel-Rasterabtastung kombiniert wird, die entweder gleich oder feiner als das Prototyp-Muster der niedrigeren Stufen der Muster-Baumstruktur sind.

5. Bildverarbeitungsverfahren nach einem der vorhergehenden Ansprüche, dadurch gekennzeichnet, daß die Merkmalsbild-Szene und jedes der N Merkmalsbild-Muster in M nach Merkmalstyp unterschiedene Merkmalsbilder unterteilt werden, und daß die M Merkmalsbilder der Bildszene mit den M Merkmalsbildern der Muster mit dem jeweils gleichen Merkmal korreliert werden und die Korrelationswerte anschließend aufsummiert werden.

6. Bildverarbeitungsverfahren nach Anspruch 5, dadurch gekennzeichnet, daß die Kanten eines Objektes als Merkmale aus einer Bildszene und den N Mustern extrahiert werden, daß das Kantenbild der Bildszene und/oder jedes der Kantenbilder der N Muster in je M Kantenbilder unterteilt werden in korrespondierende Intervalle von Kantenorientierungen, daß die Merkmalswerte von den M Kantenbildern örtlich aufgeweicht werden, daß die Merkmalswerte des entsprechenden Kantenbild-Musters mit denen der transformierten Bildszene für gleiche Intervalle korreliert werden, und daß anschließend die Korrelationswerte der Intervalle summiert werden.

7. Bildverarbeitungsverfahren nach einem der vorhergehenden Ansprüche, dadurch gekennzeichnet, daß lediglich in einem Bildausschnitt nach Mustern gesucht wird, der durch Einbringen von Weitwissen oder Annahmen über Bewegungskontinuität bei Objektbewegungen oder Informationen zusätzlicher Sensoren oder anderer Bildverarbeitungsverfahren ermittelt wird.

8. Bildverarbeitungsverfahren nach einem der vorhergehenden Ansprüche, dadurch gekennzeichnet, daß Objekte im Verkehr detektiert und erkannt werden.

9. Bildverarbeitungsverfahren nach Anspruch 8, dadurch gekennzeichnet, daß Einrichtungen der Verkehrsinfrastruktur oder Verkehrsteilnehmer detektiert und erkannt werden.

10. Vorrichtung nach einem der vorhergehenden Ansprüche, dadurch gekennzeichnet, daß die Detektionsergebnisse des Bildverarbeitungsverfahrens in einer Regeleinheit zur Steuerung des Fahrverhaltens von Fahrzeugen und/oder des Verkehrsflusses weiterverarbeitet werden.

11. Bildverarbeitungsverfahren nach einem der vorhergehenden Ansprüche, dadurch gekennzeichnet, daß über die Korrelationswerte ein Bildausschnitt ausgewählt wird, in dem Muster für ein Objekt detektiert sind, daß in dem Bildausschnitt Merkmale extrahiert werden und ein Merkmalsvektor ermittelt wird, und daß mit bekannten Klassifikationsverfahren der Merkmalsvektor einer bestimmten Objektklasse zugeordnet wird.

12. Bildverarbeitungsverfahren nach einem der vorhergehenden Ansprüche, dadurch gekennzeichnet, daß die mit den Detektions- und Erkennungsergebnissen in Bildkoordinaten ermittelte Objektposition in 2D- oder 3D- Weltkoordinaten transformiert werden.
